Europäisches Patentamt

European Patent Office

Office européen des brevets

(11) Veröffentlichungsnummer: **0 356 625**

**A1**

(12) **EUROPÄISCHE PATENTANMELDUNG**

(21) Anmeldenummer: **89109796.6**

(22) Anmeldetag: **31.05.89**

(51) Int. Cl.5: **C11D 3/12 , C01B 33/34**

(30) Priorität: **12.08.88 DE 3827360**

(43) Veröffentlichungstag der Anmeldung:
**07.03.90 Patentblatt 90/10**

(84) Benannte Vertragsstaaten:
**AT BE CH DE ES FR GB GR IT LI LU NL SE**

(71) Anmelder: **Degussa Aktiengesellschaft**
**Weissfrauenstrasse 9**
**D-6000 Frankfurt am Main 1(DE)**

(72) Erfinder: **Sax, Beata-M., Dr.**
**Wilhelm-Schöffer-Strasse 4**
**D-6460 Gelnhausen(DE)**
Erfinder: **Leonhardt, Wolfgang, Dr.**
**Röderbergweg 41**
**D-6000 Frankfurt/Main(DE)**
Erfinder: **Kiss, Akos, Dr.**
**Odenwaldstrasse 16**
**D-8755 Alzenau(DE)**
Erfinder: **Lortz, Wolfgang, Dr.**
**Wilhelm-Schöffer-Strasse 4**
**D-6460 Gelnhausen(DE)**
Erfinder: **Roebke, Wolfgang, Dr.**
**Auguste-Viktoria-Strasse 55**
**D-5040 Brühl(DE)**
Erfinder: **Dietrich, Claus**
**Teichgraben 30**
**D-5205 St. Augustin 2(DE)**

(54) Zeolithpulver des Typs Na A für die Verwendung in Flüssigwaschmitteln.

(57) Zeolithpulver des Typs Na A, gekennzeichnet durch eine mittlere Teilchengröße (= 50%-Punkt) von 1,6 bis 3,2 $\mu$m, gemessen mit dem Cilas Granulometer 715.
Dieses Zeolithpulver wird als Phosphatsubstitut in Flüssigwaschmitteln eingesetzt.

EP 0 356 625 A1

## Zeolithpulver des Typs Na A für die Verwendung in Flüssigwaschmitteln

Die Erfindung betrifft ein Zeolithpulver des Typs Na A sowie dessen Verwendung in Flüssigwaschmitteln.

Flüssigwaschmittel finden ein zunehmendes Interesse bei der Verwendung in Haushaltswaschmaschinen.

Es ist bekannt, in Flüssigwaschmitteln den Anteil an Phosphaten zumindest teilweise durch synthetische Alkalialuminiumsilikate zu ersetzen (AT-PS 335 033, CA-PS 1202 857). Die AT-PS 335 03 beschreibt ein Flüssigwaschmittel, welches als Phosphatersatzstoff Aluminiumsilikate enthält, die zu wenigstens 80 Gew.-% aus Teilchen einer Größe von 10 bis 0,01 $\mu$m, insbesondere von 8 bis 0,1 $\mu$m, bestehen und praktisch keine Teilchengrößen oberhalb 40 $\mu$m aufweisen.

Die CA-PS 1202 857 beschreibt ein Flüssigwaschmittel, welches als Aluminiumsilikat Zeolith A mit einer Teilchengröße von 0,01 bis 5 $\mu$m, vorzugsweise 0,5 bis 1,5 $\mu$m.

Die Herstellung dieses Zeolith A wird, wie die CA-PS 1202 857 angibt, in den US-Patentschriften 4096 081 und 4180 485 beschrieben.

Die bekannten Flüssigwaschmittel haben den Nachteil, daß sie eine für die Anwendung in Haushaltswaschmaschinen zu hohe Viskosität aufweisen.

Es wurde nun gefunden, daß die Viskosität der Flüssigwaschmittel, die Zeolith A als Phosphatersatzstoff enthalten, in hohem Maße von der Teilchengrößenverteilung des Zeolithpulver des Typ A abhängt.

Gegenstand der Erfindung ist ein Zeolithpulver des Typs Na A, gekennzeichnet durch eine mittlere Teilchengröße (= 50%-Punkt der Verteilungskurve) von 1,6 bis 3,2 $\mu$m, gemessen mit dem Cilas-Granulometer 715.

Vorzugsweise kann das Zeolithpulver des Typs Na A eine mittlere Teilchengröße von 1,7 bis 2,5 $\mu$m aufweisen.

Insbesondere kann die mittlere Teilchengröße 1,7 bis 2,0 $\mu$m betragen.

Ein weiterer Gegenstand der Erfindung ist ein Flüssigwaschmittel, welches das Zeolithpulver des Typs Na A mit einer mittleren Teilchengröße (= 50%-Punkt der Verteilungskurve) von 1,6 bis 3,2 $\mu$m, gemessen mit dem Cilas-Granulometer 715 als Phosphat-Substitut enthält.

Das erfindungsgemäße Zeolithpulver des Typs Na A weist den Vorteil auf, daß die damit hergestellten Flüssigwaschmittel, die für die Anwendung günstige Viskosität haben.

Beispiele

Zeolithpulver des Typs Na A mit einer Teilchengröße von 3,2 $\mu$m und 8,6 $\mu$m werden gemäß DE-ps 2517 218 beziehungsweise gemäß DE-PS 2660 726 hergestellt.

Ausgehend von einer Teilchengröße von 3,2 $\mu$m wird durch Mahlen mit einer Luftstrahlmühle ein Zeolithpulver erhalten, welches eine Teilchengröße von 1,8 $\mu$m aufweist. Die Teilchengröße von 1,1 $\mu$m wird durch Naßmahlen in einer Kolloidmühle, Trocknen und Mahlen in einer Stiftmühle erhalten.

Die Kalzium- und Magnesiumbindekapazität wird durch komplexometrische Titration der bleibenden Härte an Ca- und Mg-Ionen nach einer Kontaktzeit von 15 Minuten bestimmt. Diese Werte sind in Tabelle 1 aufgeführt:

Tabelle 1

| Teilchengröße | CaBV [mg CaO/g] | MgBV [mg CaO/g] |
|---|---|---|
| 8,6 | 157 | 12 |
| 3,2 | 169 | 29 |
| 1,8 | 170 | 32 |
| 1,1 | 157 | 50 |

Die Teilchengrößenverteilung wird mit dem Cilas-Granulometer 715 E627 durchgeführt.

Dabei werden die folgenden Bedingungen eingehalten:

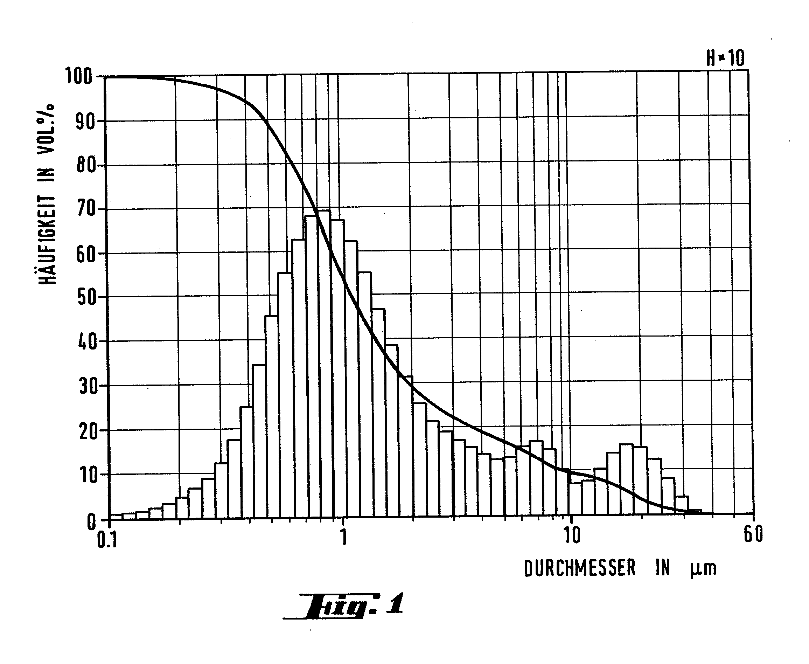

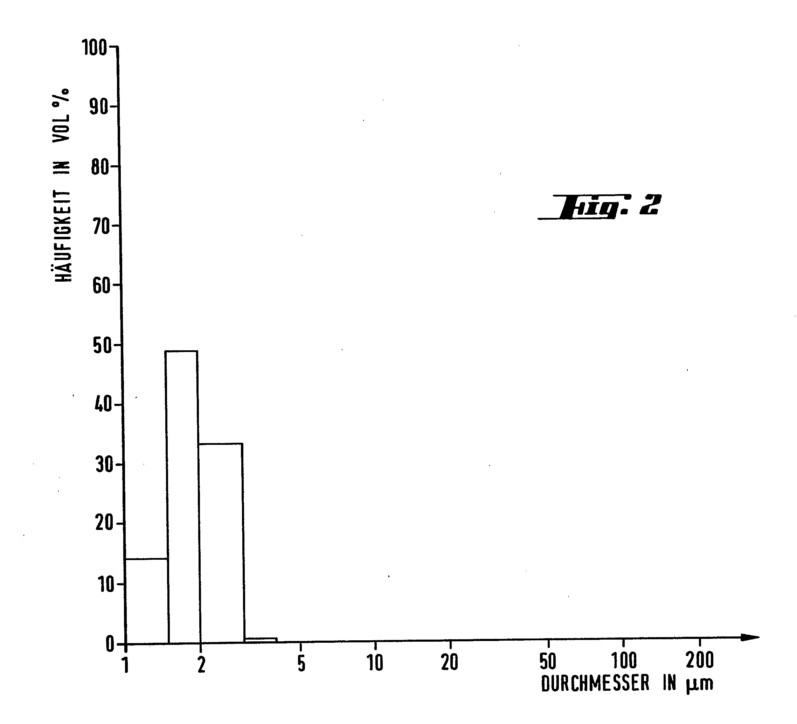

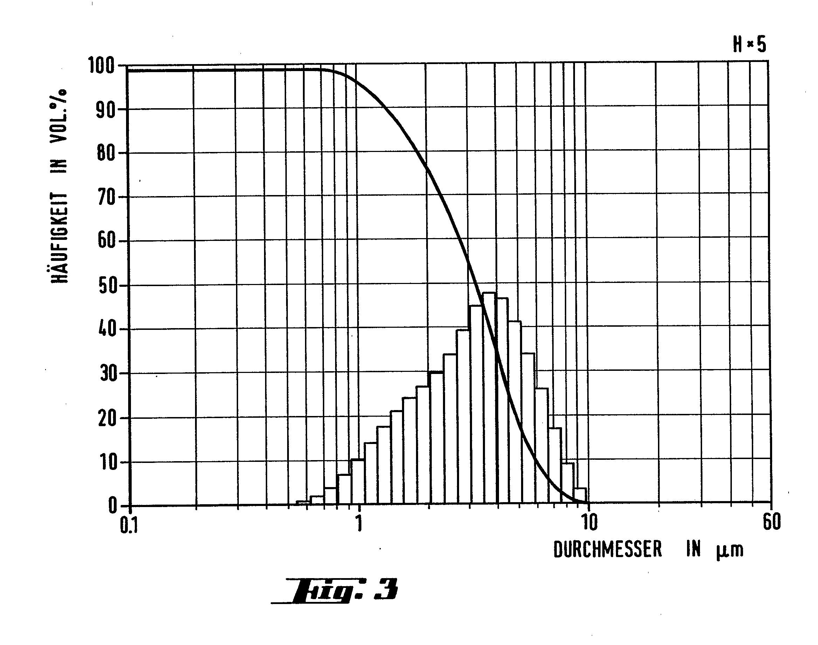

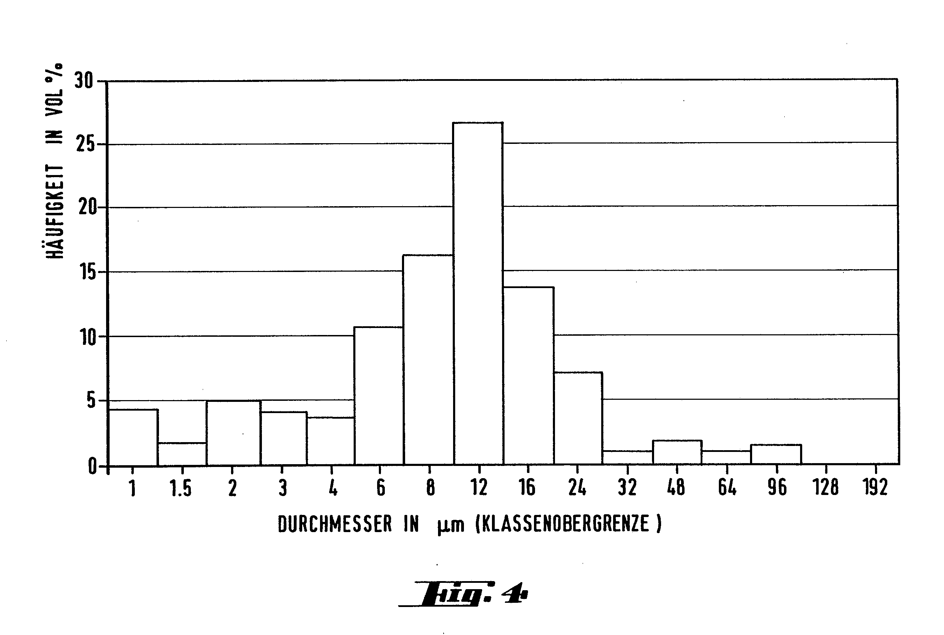

Die ermittelten Teilchengrößenverteilungskurven sind in den Figuren 1, 2, 3, und 4 dargestellt.

Als Detergentien werden eingesetzt:

Natriumalkylbenzolsulphonate (HÜLS)

$C_{13}$-$C_{15}$-Oxoalkohol mit 7 EO (BASF)

Entschäumer Wacker S 132 (Wacker Chemie) in einer Menge von 0,1 %.

Die Viskosität wird mittels eines Brookfield Viskosimeters RVT bei 5 und 50 Umdrehungen pro Minute und der Spindel 4 durchgeführt. Die Suspension wird dabei in einen 100 ml Becher eingefüllt, in welchen die Spindel bis zur entsprechenden Markierung eingetaucht wird. Die Ablesung erfolgt nach jeweils 3 Minuten.

Die Fließzeit wird bestimmt, indem man die Zeit bestimmt, die 100 ml Suspension benötigt, um durch eine 6 m Düse ohne Anwendung von Druck zu fließen.

Zur Bestimmung der Lagerstabilität werden Proben von 100 ml in geschlossenen Glasflaschen für 1 Woche und 1 Monat bei 22°C und 40°C gelagert. Die Füllhöhe ist 50 mm.

Das Verhalten der flüssigen Phase wird visuell beurteilt.

Die Suspensionen werden folgendermaßen hergestellt: In einer 250 ml Glasflasche werden die Ausgangsmaterialien eingewogen. Das Zeolithpulver wird zuletzt eingefüllt.

Die Mischung wird mittels eines Ultra Turrax (9 m/sec) unter Wasserstrahlvakuum für 15 Minuten dispergiert.

Einfache Systeme, bestehend aus Detergens, Zeolith und Wasser, werden verwendet, um den Einfluß der Detergentien und der Mischung der Detergentien auf die Viskosität und die Lagerstabilität zu untersuchen.

Ein Zeolith-Gehalt von 15, 25 und 35% wird zusammen mit einem Gehalt von 20% Detergens eingesetzt. Es werden entweder die Detergentien allein oder im Mischungsverhältnis 1:2, 1:1 und 2:1 eingesetzt.

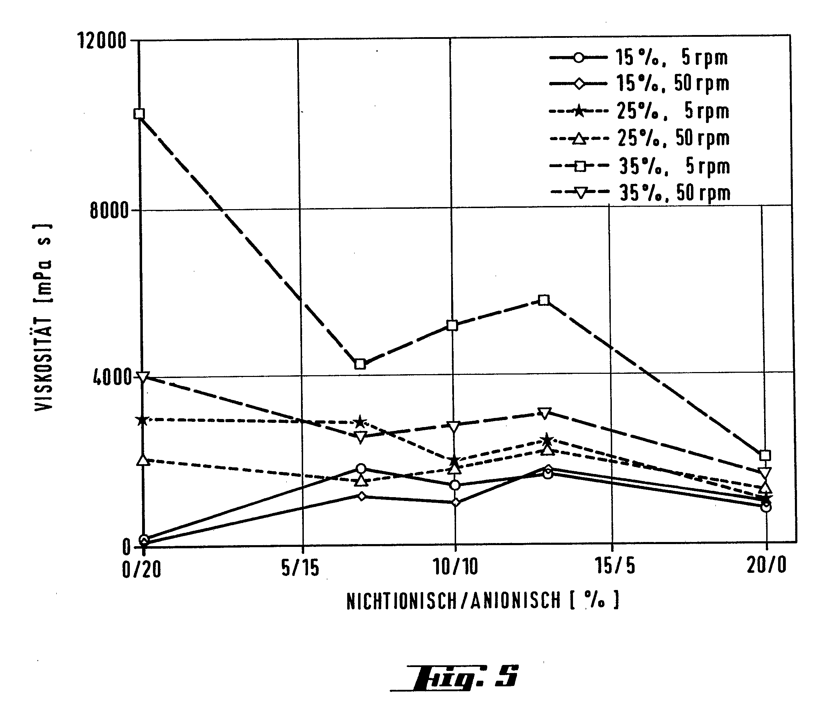

Die Ergebnisse dieser Tests sind in den Figuren 5, 6 und 7 graphisch dargestellt.

Figur 5 zeigt die Viskosität bei 5 und 50 Umdrehungen pro Minute als eine Funktion des Zeolith-Gehalts und der Detergens-Mischung. Der Zeolith hat eine Teilchengröße von 3,2 μm. Es wird festgestellt, daß das reine anionische Detergens sowie Mischungen mit einem hohen Anteil an anionischem Detergens zu einer hohen Viskosität führen. Dieser Effekt wird besonders deutlich bei einem Zeolith-Gehalt von 25 und 35%.

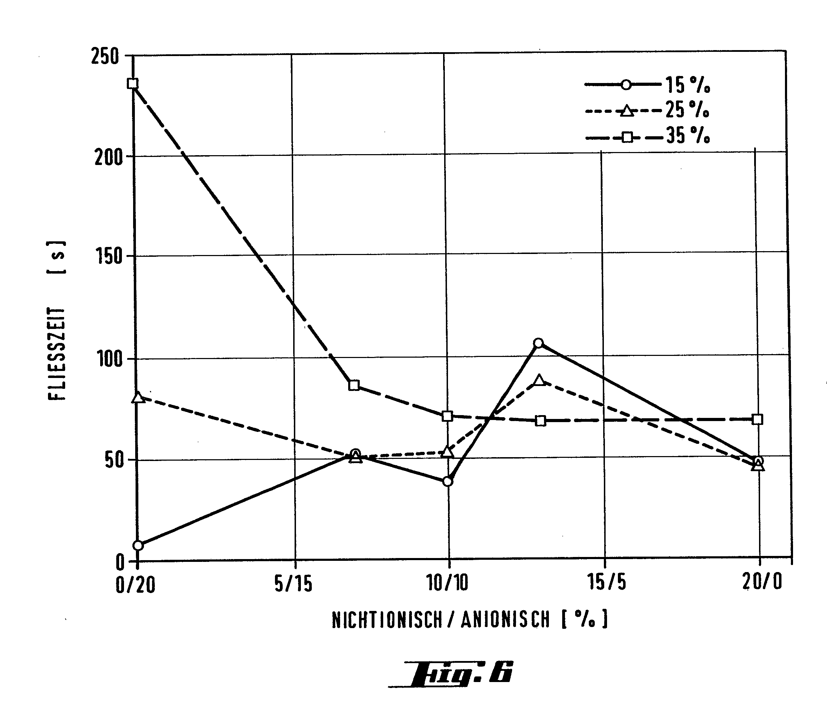

Obwohl hohe Viskositäten zu einer Verbesserung der Lagerstabilität führen, werden Anwendungseigenschaften wie Fließen und Benetzen negativ beeinflußt. Die ermittelten Fließzeiten sind in der Figur 6 graphisch dargestellt. Gute Fließzeiten gemeinsam mit einer brauchbaren Viskosität werden bei Mischungen der beiden Detergentien im Verhältnis anionisch zu nichtionisch 2:1 und 1:1 ermittelt.

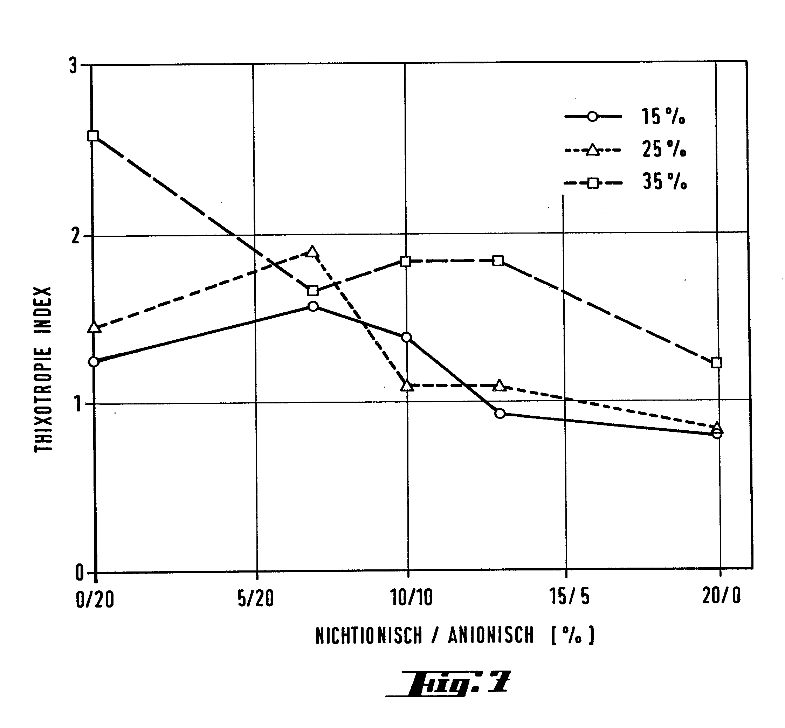

Figur 7 zeigt den Thixotropie-Index TI der Suspensionen gemäß Figur 5. TI = $\eta$ (5 Umdrehungen pro Minute) zu $\eta$ (50 Umdrehungen pro Minute).

Der Thixotropie-Index ist der Quotient aus zwei Werten für die Viskosität, die bei verschiedenen Schergefällen ermittelt werden. Der Thixotropie-Index kennzeichnet die Strukturviskosität des Systems. Je höher der Thixotropie-Index ausfällt, umso strukturierter ist das System, und umso besser ist die Lagerstabilität. Das günstigste Ergebnis zeigt - wie der Figur 7 entnommen werden kann - die Mischung, die 13 % anionisches und 7 % nicht-ionisches Detergens enthält.

Die Mischung, die 13 % anionisches und 7 % nicht-ionisches Detergens enthält, wird verwendet, um die Lagerstabilität und das Fließverhalten in Abhängigkeit von der Teilchengrößenverteilung des Zeolith A zu untersuchen.

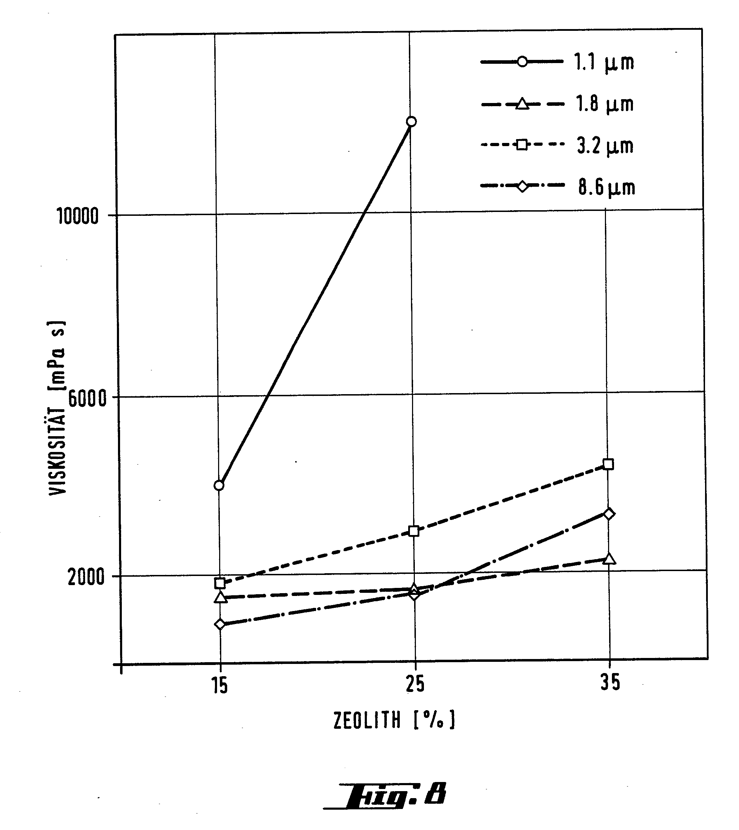

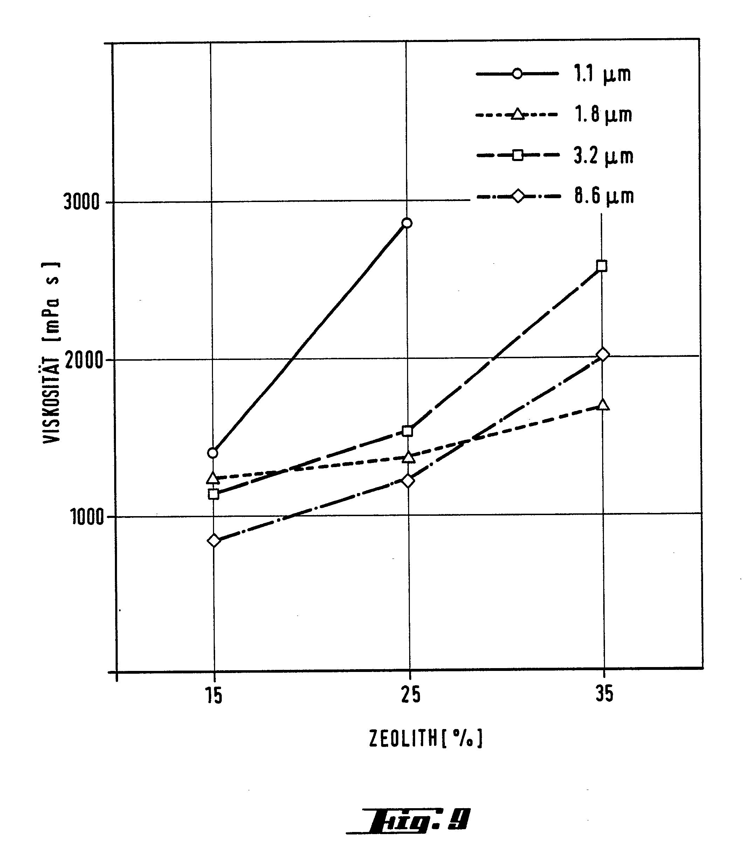

Die Ergebnisse sind in den Figuren 8 und 9 graphisch dargestellt.

Figur 8 zeigt die Viskosität der Suspensionen als eine Funktion der Zeolith A-Teilchengrößenverteilung und des Zeolith A-Gehaltes, gemessen bei 5 Umdrehungen pro Minute.

Figur 9 zeigt die Viskosität der Suspensionen als eine Funktion A-Teilchengrößenverteilung und des Zeolith A-Gehaltes, gemessen bei 50 Umdrehungen pro Minute.

Es wird festgestellt, daß besonders das Zeolithpulver mit einer Teilchengröße von 1,1 μm einen ausgeprägten Verdickungseffekt in dem Viskositätsverhalten zeigt. Die Suspension mit einem Gehalt von 25 % und insbesondere die Suspension mit einem Gehalt von 35 % Zeolith zeigen eine pastenartige Konsistenz.

Die anderen Zeolithpulver ergeben jeweils eine flüssige Suspension, wobei der Zeolith mit der Teilchengröße von 1,8 μm den geringsten Verdickungseffekt mit zunehmender Konzentration zeigt.

Die niedrige Viskosität ist ein Vorteil für die Anwendung, weil diese Suspensionen leicht gegossen werden können.

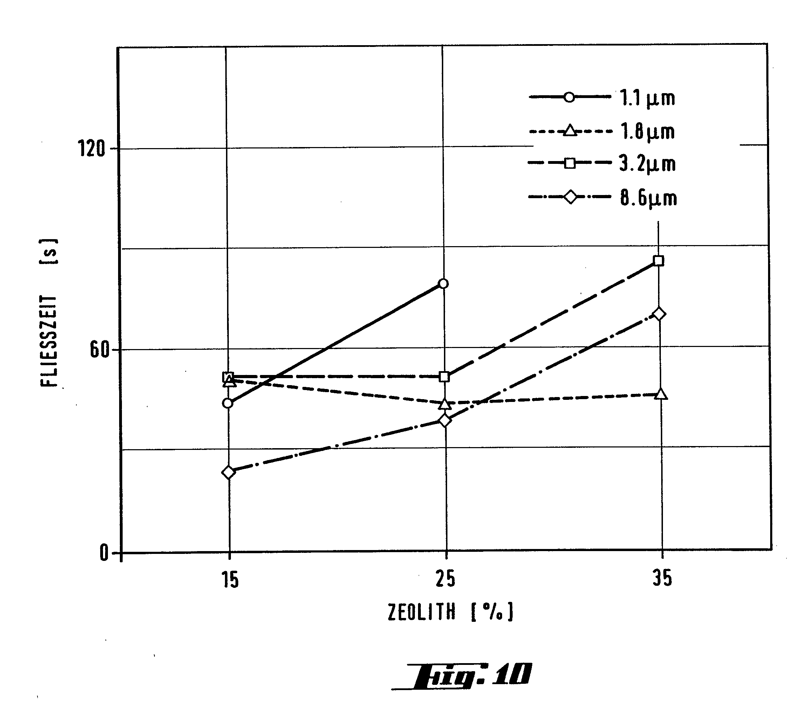

Figur 10 zeigt das Fließverhalten der Suspensionen in Abhängigkeit von dem Zeolith-Gehalt und der Teilchengröße. Dabei wird deutlich, daß die Suspension mit dem Zeolithpulver der Teilchengröße 1,8 μm für die Konzentrationen an diesem Zeolith von 25 und 35 % eine konstante Fließgeschwindigkeit aufweist. Diese Unabhängigkeit des Fließverhaltens von der Konzentration wird durch den Thixotropie-Index bestätigt.

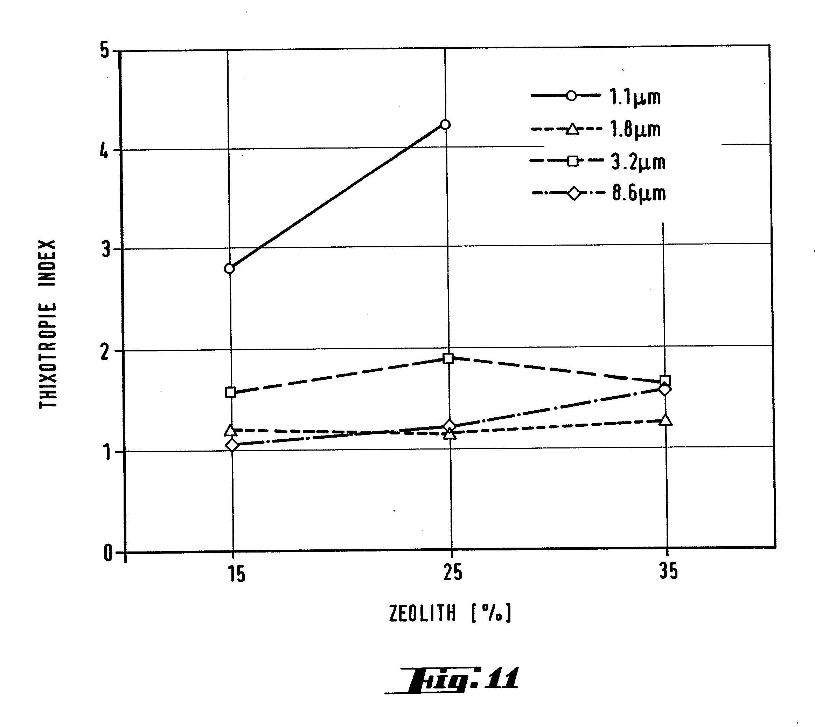

Figur 11 zeigt den Thixotropie-Index in Abhängigkeit von der Teilchengröße und der Konzentration des Zeolithpulvers. So ergibt der Zeolith mit der Teilchengröße von 1,8 μm Werte von 1,2 bis 1,3. Der Zeolith mit der Teilchengröße von 1,1 μm ergibt einen Wert von 3 bis 4.

Während der Zeolith mit der Teilchengröße 3,2 μm beziehungsweise 8,6 μm jeweils einen Wert zwischen 1,3 und 2,0 ergeben.

Der Lagertest wird mit denselben Suspensionen durchgeführt, wie sie bei den Versuchen gemäß den Figuren 8 bis 11 eingesetzt wurden.

Die Ergebnisse des Lagertestes sind in der Tabelle 2 aufgeführt.

Tabelle 2

| Teilchengröße μm | Gehalt an Zeolith % | Separation % a | |
|---|---|---|---|
| | | 20°C | 40°C |
| 1,1 | 15 | 0 | 0 |
| 1,1 | 25 b | - | - |
| 1,1 | 35 b | - | - |
| 1,8 | 15 | 36 / - | 22 / - |
| 1,8 | 25 | 14 / - | 10 / - |
| 1,8 | 35 | 2 / 6 | 1 / 2 |
| 3,2 | 15 | 50 / - | 55 / - |
| 3,2 | 25 | 50 / - | 50 / - |
| 3,2 | 35 | 3 / 6 | 3 / 8 |
| 8,6 | 15 | 60 / - | 68 / - |
| 8,6 | 25 | 30 / - | 40 / - |
| 8,6 | 35 | 12 / - | 20 / - |

a = 1. Zahl ist die Separation nach 7 Tagen
2. Zahl ist die Separation nach 28 Tagen Wenn die Separation nach 7 Tagen mehr als 10 % beträgt, wird die Separation nach 28 Tagen nicht mehr gemessen
b = Der Lagertest wird hier nicht durchgeführt, weil die Suspension eine pastenförmige Konsistenz aufweist.

Der Grad der Separation wird bestimmt aus dem Verhältnis der klaren Phase zu der Höhe der Füllung und ausgedrückt in Prozent.

Der Lagertest zeigt den Einfluß sowohl der Viskosität als auch der Teilchengröße auf die Lagerstabilität, wobei offensichtlich der Einfluß der Teilchengröße größer ist. Die günstigsten Werte, vom Standpunkt der Viskosität aus gesehen, werden mit einer Teilchengröße von 3,2 μm erzielt. Die Lagerfähigkeit dieser Suspension ist jedoch deutlich unter der Suspension, die ein Zeolithpulver mit einer Teilchengröße von 1,8 μm aufweist. Dies wird besonders deutlich, wenn man die Suspension mit einem Gehalt an Zeolith von 25 % vergleicht. Jedoch weist die Suspension mit dem Zeolith einer Teilchengröße von 1,1 μm eine zu hohe Viskosität auf, die sie für die Anwendung unbrauchbar macht.

Bei einer Teilchengröße von 8,6 μm tritt innerhalb weniger Tage eine totale Separation ein.

Die Suspension mit einem Zeolith, der eine Teilchengröße von 1,8 μm aufweist, zeigt das in der Summe beste Ergebnis in Bezug auf Fließfähigkeit und Lagerfähigkeit.

**Ansprüche**

1. Zeolithpulver des Typs Na A, gekennzeichnet durch eine mittlere Teilchengröße ( = 50%-Punkt) von 1,6 bis 3,2 µm, gemessen mit dem Cilas Granulometer 715

2. Flüssigwaschmittel, welches das Zeolithpulver des Typs Na A gemäß des Anspruch 1 enthält.

Fig. 1

EP 0 356 625 A1

Fig. 2

**Fig. 3**

H×5

EP 0 356 625 A1

_Fig: 4_

EP 0 356 625 A1

**Fig. 5**

EP 0 356 625 A1

FLIESSZEIT [ s ]

NICHTIONISCH / ANIONISCH [ % ]

250
200
150
100
50
0

0/20    5/15    10/10    15/5    20/0

15 %
25 %
35 %

*Fig. 6*

EP 0 356 625 A1

*Fig. 1*

EP 0 356 625 A1

Fig. 8

*Fig. 9*

Fig. 10

EP 0 356 625 A1

Fig. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 405 483 (M. KUZEL) <br> * Anspruch 1; Beispiele 2,3 * <br> --- | 1,2 | C 11 D 3/12 <br> C 01 B 33/34 |
| X | US-A-4 560 492 (J. CURRY) <br> * Spalte 6, Zeilen 58-60; Spalte 7, Zeilen 21-28 * <br> --- | 1 | |
| X | EP-A-0 015 024 (PROCTER & GAMBLE) <br> * Beispiel 6 * <br> --- | 1 | |
| X | FR-A-2 370 689 (DEUTSCHE GOLD- UND SILBER-SCHEIDEANSTALT) <br> * Beispiel 1; Anspruch 3 * <br> ----- | 1 | |

**RECHERCHIERTE SACHGEBIETE (Int. Cl.5)**

C 11 D

Der vorliegende Recherchenbericht wurde für alle Patentansprüche erstellt

| Recherchenort | Abschlußdatum der Recherche | Prüfer |
|---|---|---|
| DEN HAAG | 08-11-1989 | PFANNENSTEIN H.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument